# EUROPEAN PATENT APPLICATION

(11) **EP 4 339 824 A1**
(43) Date of publication of application: **20.03.2024**
(21) Application number: 23198206.7
(22) Date of filing: 19.09.2023
(51) Int. Cl.: G06F 21/62

(54) **FILE SHARING SYSTEM AND METHOD**

(30) Priority: 19.09.2022 US 202263407764 P
(71) Applicant: InfoKeyVault Technology Co., Ltd., Wenshan District, Taipei City 11674 (TW)
(72) Inventor: LIANG, Chia-Jung, 11674 Wenshan District, Taipei City (TW); LIN, Chihhung, 11674 Wenshan District, Taipei City (TW); HSIAO, Chih-Ping, 11674 Wenshan District, Taipei City (TW); SU, Yu-Jie, 11674 Wenshan District, Taipei City (TW); CHENG, Chia-Hsin, 11674 Wenshan District, Taipei City (TW); WANG, Tun-Hou, 11674 Wenshan District, Taipei City (TW); TSAI, Meng-Chao, 11674 Wenshan District, Taipei City (TW); LIN, Yueh-Chin, 11674 Wenshan District, Taipei City (TW)
(74) Representative: Reichert & Lindner Partnerschaft Patentanwälte

(57) **Abstract**

In a file sharing system, a key manager unit realizes a correspondence between the first user identifier and the first public key in response to a registration request of the first user, generates a first key material for encrypting the first file into a first encrypted file, and generates a first credential according to the first user identifier, the first file identifier, the first public key and the first key material after receiving an access-right claim request to the first file from the first user. A file storage unit stores the first encrypted file and the first credential. The first user uses the first user identifier, the first file identifier and the first private key to retrieve the first key material out of the first credential, and uses the first key material to decrypt the first encrypted file into the first file.

## Description

### CROSS-REFERENCE TO RELATED APPLICATIONS

The present application is a nonprovisional application claiming benefit from a prior-filed provisional application bearing a Serial No. 63/407,764 and filed September 19, 2022, the entity of which is incorporated herein for reference.

### FIELD OF THE INVENTION

The present invention relates to system and method for file sharing, and more particular to system and method for file sharing under access-right management.

### BACKGROUND OF THE INVENTION

It is quite common for a user to store a digital data file in a cloud storage space for file sharing. Therefore, for effectively protecting the digital data file in the cloud storage space from arbitrary access, an exclusive access right is required for a user to access the digital data file. That is, the digital data file is encrypted with a key known only to the user in advance, and can be decrypted subsequently by the user with the key to successfully retrieve the original data of the digital data file.

However, in the above-mentioned protection method, it is critical to ensure that the user owns the only unique key. Under this circumstance, since a key to a digital data file owned by a user is different and independent from a key to the same digital data file owned by another user, there are a huge number of encryption data in connection to pairing association between users and files. Undesirably, a lot of storage space is required.

Conventionally, an Access Control List is commonly set up for data access. However, the data amount of the Access Control List can be up to countless N × F as numerous N users and numerous F files are generally associated in a file system. Therefore, an operating system may group users based on access rights. In other words, management is conducted according to users, groups and files/directories. Such management makes the mechanism of access control list feasible, but it will bring security problems, such as identity fraud or access-right tampering.

Furthermore, in a common file-sharing process, a file to be shared is first uploaded by a file owner to a remote server or storage media known to a file sharer so that the file sharer can access the file in the remote server or storage media. If the file is to be protected from unauthorized access, it is necessary to set an exclusive access right to the file or establish an encryption key specific to the file for the file sharer to successfully access the file. Once a lot of file owners are uploading files and a lot of file sharers are involved at the same time, a great number and variety of encryption keys from the file owners will need to be distinguished and managed in order to allow only authorized users to access correct files. The management is complicated and impractical.

### SUMMARY OF THE INVENTION

Therefore, the present invention provides file sharing system and method to overcome the above-described drawbacks.

In a first aspect of the present invention, a file sharing system is adapted to be used with at least a first file and a first user. The first file corresponds to a first file identifier, and the first user has a first key pair of an asymmetric type, the first key pair including at least a first user identifier, a first public key and a first private key. The system comprises: a key manager unit realizing a correspondence between the first user identifier and the first public key in response to a registration request of the first user, generating a first key material for encrypting the first file into a first encrypted file, and generating a first credential according to the first user identifier, the first file identifier, the first public key and the first key material after receiving an access-right claim request to the first file from the first user; and a file storage unit in communication with the key manager unit for storing the first encrypted file and the first credential, whereby, the first user uses the first user identifier, the first file identifier and the first private key to retrieve the first key material out of the first credential, and uses the first key material to decrypt the first encrypted file into the first file.

In a second aspect of the present invention, a file sharing method is adapted to be used with a key manager unit, a first file and a first user, the first file corresponding to a first file identifier. The first user has a first key pair of an asymmetric type. The first key pair includes at least a first user identifier, a first public key and a first private key. The method comprises: the key manager unit realizing a correspondence between the first user identifier and the first public key in response to a registration request of the first user; the key manager unit generating a first key material for encrypting the first file into a first encrypted file; the key manager unit generating a first credential according to the first user identifier, the first file identifier, the first public key and the first key material after receiving an access-right claim request to the first file from the first user; and storing the first encrypted file and the first credential, whereby, the first user uses the first user identifier, the first file identifier and the first private key to retrieve the first key material out of the first credential, and uses the first key material to decrypt the first encrypted file into the first file.

In a third aspect of the present invention, a file sharing method is adapted to be used with a key manager unit and a specified file owned by a first user and to be shared with a second user. The specified file corresponds to a file identifier. The first user has a first user identifier, a first system public key and a first system private key. The second user has a second user identifier, a second system public key and a second system private key. The method comprises: the key manager unit realizing a correspondence between the first user identifier and the first system public key in response to a first registration request of the first user and realizing a correspondence between the second user identifier and the second system public key in response to a second registration request of the second user; the key manager unit acknowledging the specified file and an access-right claim request to the specified file provided by the first user, wherein the access-right claim request comprises the second user identifier and the file identifier; the key manager unit generating a specified key material for encrypting the specified file into an encrypted file, and generating a specified credential according to the second user identifier and the file identifier in the access-right claim request, the second system public key and the specified key material; and storing the encrypted file and the specified credential, whereby, the second user uses the second user identifier, the file identifier and the second system private key to retrieve the specified key material out of the specified credential, and uses the specified key material to decrypt the encrypted file into the specified file.

In a fourth aspect of the present invention, a file sharing method, is adapted to be used with a key manager unit, a first user, a second user and a specified file owned by the second user. The method comprises: the method comprising: executing a verification of the first user; generating a second user identifier corresponding to the second user, a file identifier corresponding to the specified file and a verification pass code in response a request from the first user after the first user passes the verification; transmitting the verification pass code to the second user; generating a key material corresponding to the file identifier; issuing an access-right claim request to the key manager unit, wherein the access-right claim request includes the file identifier and a first user identifier corresponding to the first user; generating a credential according to the file identifier, the first user identifier and a first public key of the first user; executing a erification of the second user based on the verification pass code; using the key material to encrypt the specified file into an encrypted file; and storing the credential and the encrypted file.

### BRIEF DESCRIPTION OF THE DRAWINGS

The invention will become more readily apparent to those ordinarily skilled in the art after reviewing the following detailed description and accompanying drawings, in which:
FIG. 1 is a schematic block diagram illustrating a file sharing system according to an embodiment of the present invention;
FIG. 2 is a schematic block diagram illustrating a file sharing system according to another embodiment of the present invention;
FIG. 3 is a flowchart schematically illustrating a file sharing method according to an embodiment of the present invention; and
FIG. 4 is a schematic block diagram illustrating a file sharing system according to a further embodiment of the present invention.

### DETAILED DESCRIPTION OF PREFERRED EMBODIMENTS

The invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

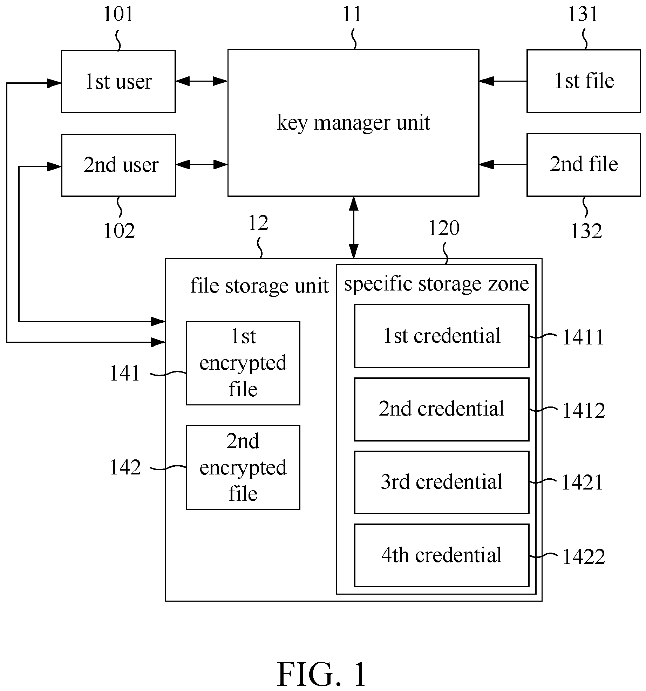

Please refer to FIG. 1, in which a file sharing system according to an embodiment of the present invention is schematically illustrated. The file sharing system includes a key manager unit 11 and a file storage unit 12 and can be used between a plurality of files and a plurality of users. The key manager unit 11, for example, may be but not limited to a cloud server. The file storage unit 12, for example, may be but not limited to a cloud storage or a network attached storage (NAS). The file, for example, may be but not limited to a digital data file that can be saved and transmitted. The user, for example, may be but not limited to a computer, a smart phone or any other suitable information device. For illustration purpose, a first user 101, a second user 102, a first file 131 and a second file 132 are exemplified in the file sharing system of FIG. 1. The first file 131 corresponds to a first file identifier (F-ID), the second file 132 corresponds to a second file identifier. The first user 101 generates an exclusive first key pair of asymmetric type by any suitable conventional or newly developed means. The first key pair includes at least a first user identifier (U-ID), a first public key and a first private key. Likewise, the second user 102 generates an exclusive second key pair of asymmetric type by any suitable conventional or newly developed means. The second key pair includes at least a second user identifier (U-ID), a second public key and a second private key.

In response to a registration request from the first user 101, the key manager unit 11 realizes a correspondence between the first user identifier and the first public key. Then the key manager unit 11 generates a first key material for encrypting the first file 131 into a first encrypted file 141, and associates the first key material with the first file identifier to generate a first identifier key pair (F-ID, key material). The key manager unit 11 further generates a first credential 1411 according to the first user identifier, the first file identifier, the first public key and the first key material after receiving an access-right claim request to the first file 131 from the first user 101. The access-right claim request includes the first user identifier and the first file identifier. The first encrypted file 141 and the corresponding first credential 1411 are stored into the file storage unit 12. Accordingly, for accessing the first file 131, the first user 101 uses the first user identifier, the first file identifier and the first private key to retrieve the first key material out of the first credential 1411, and uses the first key material to decrypt the first encrypted file 141 into the first file 131.

Likewise, in response to a registration request from the second user 102, the key manager unit 11 realizes a correspondence between the second user identifier and the second public key. Then the key manager unit 11 generates a second credential 1412 according to the second user identifier, the first file identifier, the second public key and the first key material after receiving an access-right claim request to the first file 131 from the second user 102. The access-right claim request includes the second user identifier and the first file identifier. The first encrypted file 141 and the corresponding second credential 1412 are also stored into the file storage unit 12. Accordingly, for accessing the first file 131, the second user 102 uses the second user identifier, the first file identifier and the second private key to retrieve the first key material out of the second credential 1412, and uses the first key material to decrypt the first encrypted file 141 into the first file 131.

In another example that the first user 101 intends to access the second file 132, the key manager unit 11 may further generate a second key material for encrypting the second file 132 into a second encrypted file 142, and associates the second key material with the second file identifier to generate a second identifier key pair. The key manager unit 11 further generates a third credential 1421 according to the first user identifier, the second file identifier, the first public key and the second key material after receiving an access-right claim request to the second file 132 from the first user 101. The access-right claim request includes the first user identifier and the second file identifier. The second encrypted file 142 and the corresponding third credential 1421 are stored into the file storage unit 12. Accordingly, for accessing the second file 132, the first user 101 uses the first user identifier, the second file identifier and the first private key to retrieve the second key material out of the third credential 1421, and uses the second key material to decrypt the second encrypted file 142 into the second file 132.

In a further example, the key manager unit 11 generates a fourth credential 1422 according to the second user identifier, the second file identifier, the second public key and the second key material after receiving an access-right claim request to the second file 132 from the second user 102. The access-right claim request includes the second user identifier and the second file identifier. The second encrypted file 142 and the corresponding fourth credential 1422 are also stored into the file storage unit 12. Accordingly, for accessing the second file 132, the second user 102 uses the second user identifier, the second file identifier and the second private key to retrieve the second key material out of the fourth credential 1422, and uses the second key material to decrypt the second encrypted file 142 into the second file 132.

In an embodiment, the first file identifier and the second file identifier are generated by the key manager unit 11 according to a part of the first file and a part of the second file, respectively, by way of a hash algorithm. For example, the file identifier is generated according to the filename of the file. In an embodiment, the first key material and the second key material are random numbers generated by the key manager unit 11. In an embodiment, the first credential and the second credential are stored as respective extensive data of the first encrypted file and the second encrypted file. In an embodiment, the first credential and the second credential, as well as other credentials, are stored in a storage zone 120 specific to credential data. In an embodiment, the storage zone 120 is configured in the file storage unit 12, and can be searched by an authorized user based on a user identifier and a file identifier for accessing the file subsequently. In an embodiment, the file storage unit 12 is a local memory device or composed of a plurality of cloud memory devices.

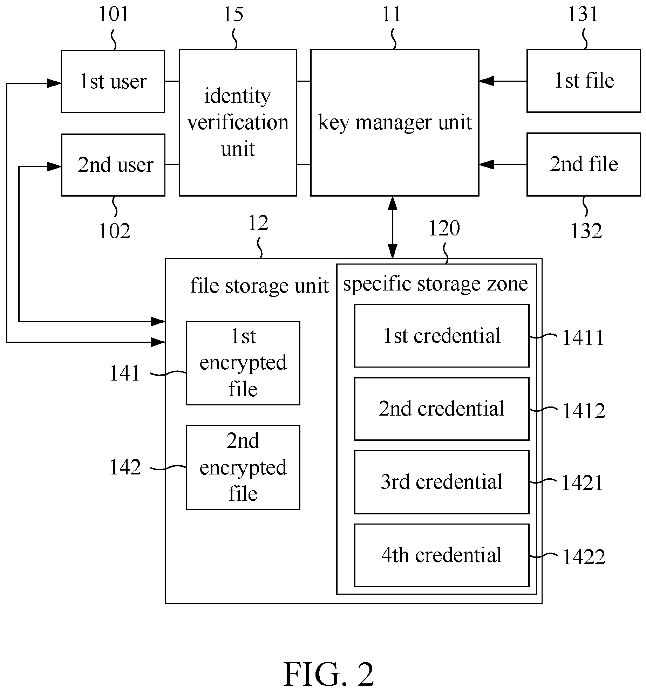

Please refer to FIG. 2, in which a file sharing system according to another embodiment of the present invention is schematically illustrated. The file sharing system in this embodiment, like the file sharing system illustrated in FIG. 1, includes the key manger unit 11 and the file storage unit 12 in communication with the key manger unit 11. The file sharing system in this embodiment further includes an identity verification unit 15 in communication with the key manager unit 11. For example, the identity verification unit 15 executes verification of the user 101, 102 that intends to access the file 131, 132. If the identity verification fails, the key manger unit 11 will deny the access-right claim request of the user 101, 102 to the file 131, 132. On the other hand, if the user 101, 102 passes the identity verification, the key manager unit 11 will be notified to process the access-right claim request to the file 131, 132 from the user 101, 102. Subsequently, the generation of the credential according to the user identifier, the file identifier, the public key and the key material can be executed by the key manager unit 11. The authentication algorithm can be implemented with an account-password set commonly used in the art, a FIDO-compliant physical security key (e.g., a USB key), or any other suitable conventional or newly developed algorithm. The identity verification unit 15 may be integrated into, for example, the same chip of the same server with the key manager unit 11. In other words, the identity verification unit 15 may be configured as a sub-module of the key manager unit 11.

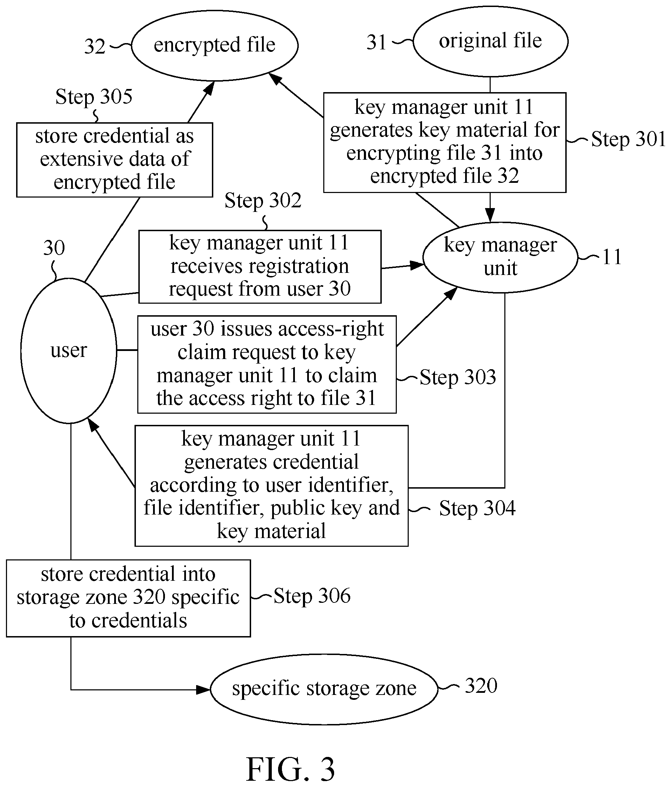

Please refer to FIG. 3. A flowchart of a file sharing method according to the present invention is illustrated. In Step 301, the key manager unit 11 generates a key material for encrypting a file 31 to be shared into an encrypted file 32. In step 302, the key manager unit 11 receives a registration request from a user 30. From the registration request, the key manager unit 11 can realize a correspondence (U-ID, public key) between the user identifier and the public key of the user 30. In Step 303, the user 30 issues an access-right claim request to the key manager unit 11 to claim the access right to information of the file 31, e.g., the file identifier (F-ID), wherein the access-right claim request includes the user identifier corresponding to the user 30 and the file identifier corresponding to the file 31. In Step 304, the key manager unit 11 generates a credential according to the user identifier, the file identifier, the public key and the key material after receiving an access-right claim request. Subsequently, the credential is stored in one of two exemplified ways shown in Step 305 or Step 306. In Step 305, the credential is stored as extensive data of the encrypted file. For example, the credential and the encrypted file are stored in the same storage zone and associated with each other. In step 306, the credential is stored into a storage zone 320 specific to credentials. The storage zone 320, for example, may be a part of the file storage unit 12, which is implemented with a local memory device or composed of a plurality of cloud memory devices. In an embodiment, the storage zone can be searched by an authorized user based on a user identifier and a file identifier.

According to the above-described embodiments of file sharing system and method, management of file access rights under key management can be improved. The file sharing method is feasible to protect a file among multiple users without complicating the system. The method utilizes differentiation between file owners and file sharers to conduct management thereamong so that the management can be conducted without password identification. The file owner is defined as the one authorized to transmit an original file to the key manager unit to be encrypted into the encrypted file, and the file sharer is defined as the one authorized to get the credential to decrypt the encrypted file. According to the present invention, it is possible for a file to correspond to more than one file owner and more than one sharer, and it is possible for a user to play either the role of file owner or the role of file sharer. The file owner has the right to upload the original file to the key manger unit to be encrypted, while the file sharer is eligible to obtain the credential specific thereto after passing the identity verification.

In an embodiment, each user of the file sharing system has two kinds of key pairs. One is a key pair including a system public key (Sys_Public) and a system private key (Sys_Private), and the other is a key pair including an authentication public key (Auth_Public) and an authentication private key (Auth Private). The user identifier (U-ID) and the two public keys (Auth_Public, Sys_Public) are combined to form registration data (U-ID, Auth Public) and (U-ID, Sys Public) of the key manager unit 11. Therefore, before the transmission of the original or undecrypted file to the key manager unit 11 by the file owner, the file owner may inform the key manager unit 11 of the file owner and the file sharer through the access-right claim request. In addition, the file owner may inform the key manager unit 11 of the storage option of the credential, e.g., being stored into the specific storage zone or being stored together with the encrypted file associated therewith.

Therefore, the key manager unit 11 can use the file sharing system and method described above to encrypt the file after receiving the access right claim request from the user who plays the role of the "file owner" for all file accessors (which may include the "file owner" and the "file sharer"), and the storage policy of the credential. The key manager unit 11 then generates a key material to encrypt the file to form the encrypted file. One or more credentials corresponding to the encrypted file may be generated based on the contents of the access-right claim request, with the one or more credentials corresponding to one or more file accessors with access rights. The credentials of all file accessors and the encrypted file can then be stored in accordance with the storage policy and made available for query and access by one or more file accessors.

In this way, before any user playing the role of "file sharer" accesses the file, the key manager unit 11 (or identity verification unit 15) verifies the file accessor first, for example, by the following process. The key manager unit 11 randomly generates a byte string and asks the file accessor to generate a corresponding digital signature based on the authentication private key (Auth_Private) of the file accessor, so that the key manager unit 11 can use the authentication public key (Auth_Private) for signature authentication. In this way, only the authenticated file accessor has the right to request its corresponding credential from the key manager unit 11.

Furthermore, any authenticated file accessor accessing a file may request its corresponding credential by providing the key manager unit 11 (or file storage unit 12) with a user identifier and file identifier (U-ID, F-ID). This request may result in two scenarios: one is that the requested credential does not exist, which means that the file accessor does not have the right to access the file; the other is that the requested credential exists, and the file accessor can use its own system private key (Sys_Private) to extract the credential from it. The file accessor can extract the key material from the credential in accordance with its own system private key, and decrypt the obtained encrypted file to access the original file contents. In addition, the "file owner" can submit a change request of access right to the key manager unit 11. For the "file owner" that has passed the identity verification, the key manager unit 11 can regenerate one or more credentials according to the content of the change request and update the relevant credentials in accordance with the management policy of the key manager unit 11.

In addition, by applying the technical framework of the file sharing system and method described above, it is possible to further develop a method for enhancing file upload security by changing the file sharing procedure. In an embodiment, the method adopts the "single file multi-accessor protection mechanism" with the adjustment of the file sharing procedure to ensure that the file owner can upload the file and securely share the file after it is created, even before the file is created, as long as the recipients of the file sharing is known.

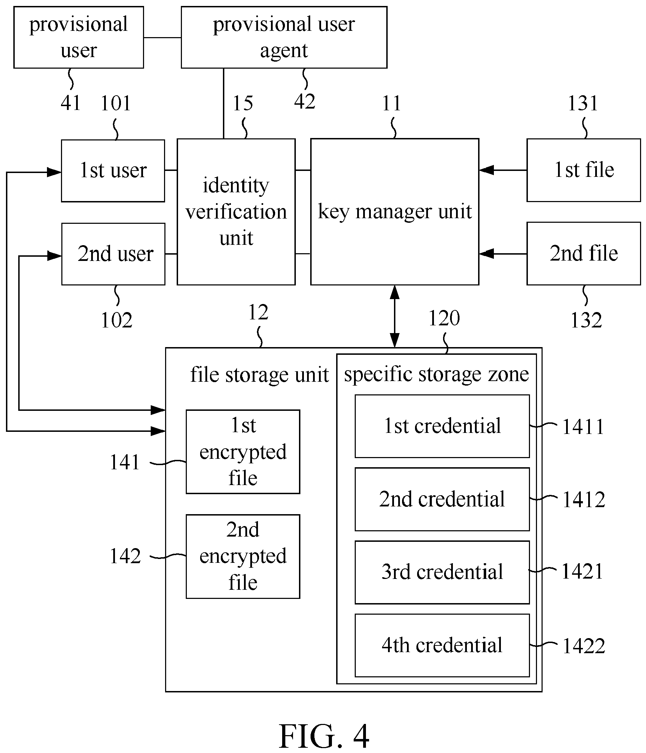

FIG. 4 schematically illustrates a file sharing system according to a further embodiment of the present invention. In this embodiment, a first user 101 (e.g., a "file sharer" as defined above) knows that a "file owner" (which may be a non-registered user) is about to upload a specified file. Therefore, the "file sharer" may, after completing the identity verification with the identity verification unit 15 (or the key manager unit 11), request the key manager unit 11 to generate a provisional user 41 representing the "file owner" and its unique user identifier (U-ID), as well as to generate the file identifier (F-ID) representing the file to be shared. A unique pair (U-ID, F-ID) is thus formed. The file sharer may further request the key manager unit 11 to create a virtual provisional user agent 42 on behalf of the provisional user 41, generate a corresponding provisional public-private key pair (Sys_Public, Sys_Private) with a sufficiently strong verification pass code. The provisional public-private key pair and the verification pass code, or alternatively only the private key and the verification pass code, are sent to the provisional user 41, i.e., the "file owner". In this way, before the file to be shared is uploaded, the key manager unit 11 can first generate the corresponding key material based on the file identifier (F-ID) included in the pair (U-ID, F-ID). Furthermore, one or more authenticated file sharer can further issue an access-right claim request to the key manager unit 11 based on the file identifier (F-ID) The access-right claim request includes the file identifier and the user identifier of the file sharer. The key manager unit 11 then generates the corresponding credential based on the file identifier, the user identifier and a first public key of the user.

When the provisional user 41 (that is, the file owner) is ready to upload the file to be shared, the key management unit 11, having known in advance that the user is the provisional user 41, can authenticate the identity verification pass code through the identity verification unit 15 (or the key manager unit 11). Then the key management unit 11 itself (or the provisional user agent unit 42) encrypts the file to be shared by using the key material in the same way as described previously, and then stores the credentials of all the file sharers and the encrypted file in accordance with the management policy. In this way, the "file owner" does not need to be a registered user, but uses the identity of the provisional user 41 to upload the file. It is to be noted that the right associated with the provisional user 41, the provisional user agent unit 42, the provisional public-private key pair and the identity verification pass code have time limit. Once the time limit expires, the provisional user 41, the provisional user agent unit 42, the provisional public-private key pair and the identity verification pass code will become invalid by the identity verification unit 15 (or the key manager unit 11). As for the file sharers involved in the access right claim request, all of them can access the files in accordance with the "single file multi-accessor protection mechanism". In this way, the file sharing can be initiated by not only the file owner but the file sharer. Complicated encryption settings or errors in access right settings can thus be avoided and the management cost can be significantly reduced.

While the invention has been described in terms of what is presently considered to be the most practical and preferred embodiments, it is to be understood that the invention needs not be limited to the disclosed embodiment. On the contrary, it is intended to cover various modifications and similar arrangements included within the scope of the appended claims which are to be accorded with the broadest interpretation so as to encompass all such modifications and similar structures.

## Claims

1. A file sharing system adapted to be used with at least a first file and a first user, the first file corresponding to a first file identifier, the first user having a first key pair of an asymmetric type, the first key pair including at least a first user identifier, a first public key and a first private key, and the system comprising:
a key manager unit realizing a correspondence between the first user identifier and the first public key in response to a registration request of the first user, generating a first key material for encrypting the first file into a first encrypted file, and generating a first credential according to the first user identifier, the first file identifier, the first public key and the first key material after receiving an access-right claim request to the first file from the first user; and
a file storage unit in communication with the key manager unit for storing the first encrypted file and the first credential,
whereby, the first user uses the first user identifier, the first file identifier and the first private key to retrieve the first key material out of the first credential, and uses the first key material to decrypt the first encrypted file into the first file.

2. The file sharing system according to claim 1, wherein the key manager unit executes a hash algorithm based on a part of the first file to generate a random number as the first key material.

3. The file sharing system according to claim 1, wherein the first credential is stored as an extensive data of the first encrypted file.

4. The file sharing system according to claim 1, wherein the first credential is stored in a storage zone specific to credential data, and the storage zone specific to credential data is searchable by the first user according to the first user identifier and the first file identifier.

5. The file sharing system according to claim 1, further comprising an identity verification unit in communication with the first user and the key manager unit for executing verification of the first user, and notifying the key manager unit to process the access-right claim request to the first file from the first user depending on the verification result.

6. The file sharing system according to claim 1, adapted to be used with a second user, the second user having a second key pair of an asymmetric type, the second key pair including at least a second user identifier, a second public key and a second private key, wherein the key manager unit realizes a correspondence between the second user identifier and the second public key in response to a registration request of the second user, generates a second credential according to the second user identifier, the first file identifier, the second public key and the first key material after receiving an access-right claim request to the first file from the second user; and the second credential is stored into the file storage unit and associated with the first encrypted file, whereby the second user uses the second user identifier, the first file identifier and the second private key to retrieve the first key material out of the first credential, and uses the first key material to decrypt the first encrypted file into the first file.

7. A file sharing method, adapted to be used with a key manager unit, a first file and a first user, the first file corresponding to a first file identifier, the first user having a first key pair of an asymmetric type, the first key pair including at least a first user identifier, a first public key and a first private key, and the method comprising:
the key manager unit realizing a correspondence between the first user identifier and the first public key in response to a registration request of the first user;
the key manager unit generating a first key material for encrypting the first file into a first encrypted file;
the key manager unit generating a first credential according to the first user identifier, the first file identifier, the first public key and the first key material after receiving an access-right claim request to the first file from the first user; and
storing the first encrypted file and the first credential,
whereby, the first user uses the first user identifier, the first file identifier and the first private key to retrieve the first key material out of the first credential, and uses the first key material to decrypt the first encrypted file into the first file.

8. The file sharing method according to claim 7, adapted to be further used with a second user, wherein:
the second user has a second key pair of an asymmetric type;
the second key pair includes at least a second user identifier, a second public key and a second private key;
the key manager unit realizes a correspondence between the second user identifier and the second public key in response to a registration request of the second user;
the key manager unit generates a second credential according to the second user identifier, the first file identifier, the second public key and the first key material after receiving an access-right claim request to the first file from the second user; and
the second credential is stored into the file storage unit and associated with the first encrypted file,
whereby the second user uses the second user identifier, the first file identifier and the second private key to retrieve the first key material out of the first credential, and uses the first key material to decrypt the first encrypted file into the first file.

9. A file sharing method, adapted to be used with a key manager unit and a specified file owned by a first user and to be shared with a second user, the specified file corresponding to a file identifier, the first user having a first user identifier, a first system public key and a first system private key, the second user having a second user identifier, a second system public key and a second system private key, and the method comprising:
the key manager unit realizing a correspondence between the first user identifier and the first system public key in response to a first registration request of the first user and realizing a correspondence between the second user identifier and the second system public key in response to a second registration request of the second user;
the key manager unit acknowledging the specified file and an access-right claim request to the specified file provided by the first user, wherein the access-right claim request comprises the second user identifier and the file identifier;
the key manager unit generating a specified key material for encrypting the specified file into an encrypted file, and generating a specified credential according to the second user identifier and the file identifier in the access-right claim request, the second system public key and the specified key material; and
storing the encrypted file and the specified credential,
whereby, the second user uses the second user identifier, the file identifier and the second system private key to retrieve the specified key material out of the specified credential, and uses the specified key material to decrypt the encrypted file into the specified file.

10. The file sharing method according to claim 9, wherein the first user further has a first authentication public key and a first authentication private key; the second user further has a second authentication public key and a second authentication private key; the key manager unit realizes a correspondence between the first user identifier and the first authentication public key in response to the first registration request of the first user and realizing a correspondence between the second user identifier and the second authentication public key in response to the second registration request of the second user; and the key manager unit executes verification of the second user before the second user is authorized to access the specified file.

11. The file sharing method according to claim 10, wherein the verification of the second user is executed by:
the key manager unit generating a specified byte string randomly to the second user, and requesting a digital signature, which is derived from the second verification private key and the specified byte string, from the second user; and
the key manager unit executing authentication of the digital signature with the second authentication public key to determine whether the second user is eligible for requesting the specified credential from the key manager unit.

12. A file sharing method, adapted to be used with a key manager unit, a first user, a second user and a specified file owned by the second user, the method comprising:
executing a verification of the first user;
generating a second user identifier corresponding to the second user, a file identifier corresponding to the specified file and a verification pass code in response a request from the first user after the first user passes the verification;
transmitting the verification pass code to the second user;
generating a key material corresponding to the file identifier;
issuing an access-right claim request to the key manager unit, wherein the access-right claim request includes the file identifier and a first user identifier corresponding to the first user;
generating a credential according to the file identifier, the first user identifier and a first public key of the first user;
executing a verification of the second user based on the verification pass code;
using the key material to encrypt the specified file into an encrypted file; and
storing the credential and the encrypted file.

13. The file sharing method according to claim 12, wherein the first user passing the verification requests the key manager unit to establish a provisional user and a provisional user agent unit, corresponding to which a provisional public-private key pair and the identity verification pass code, which is transmitted to the provisional user, wherein the provisional user represents the second user, and the key manager unit requests the provisional user agent unit to encrypt the specified file into an encrypted file with the key material, and then stores the credential and the encrypted file.

14. The file sharing method according to claim 12, wherein when the first user accesses the specified, the first key material is retrieved out of the credential with the first user identifier, the file identifier and a private key of the first user, and then the key material is used to decrypt the encrypted file into the specified file.
